# EUROPÄISCHE PATENTSCHRIFT

(11) **EP 0 896 897 B1**
(45) Veröffentlichungstag und Bekanntmachung des Hinweises auf die Patenterteilung: **12.06.2002**
(21) Anmeldenummer: 98114415.7
(22) Anmeldetag: 31.07.1998
(51) Int. Cl.: B60K 35/00

(54) **Zur Befestigung in einem Kraftfahrzeug vorgesehene Anzeigeeinheit**
Display unit for attachment in a motor vehicle
Unité d'affichage pour la fixation dans une automobile

(30) Priorität: 14.08.1997 DE 19735177
(43) Veröffentlichungstag der Anmeldung: 17.02.1999
(73) Patentinhaber: Siemens Aktiengesellschaft, 80333 München (DE)
(72) Erfinder: Heberle, Klaus, 79276 Reute (DE); Noll, Heinrich, Dr., 64823 Gross-Umstadt (DE)

(56) Entgegenhaltungen:
- EP-A- 0 403 162
- DE-A- 4 213 129
- DE-A- 19 509 271
- PATENT ABSTRACTS OF JAPAN vol. 010, no. 068 (P-437), 18. März 1986 & JP 60 209114 A (NISSAN JIDOSHA KK), 21. Oktober 1985

## Beschreibung

Die Erfindung betrifft eine zur Befestigung in einem Kraftfahrzeug vorgesehene Anzeigeeinheit mit einem Display, wobei eine Anzeige auf dem Display entweder in einem kleinen Winkelbereich oder in einem großen Winkelbereich sichtbar ist.

Solche Anzeigeeinheiten werden beispielsweise für eine Satellitennavigation und zur Darstellung eines Fernsehbildes in heutigen Kraftfahrzeugen eingesetzt und sind aus der Praxis bekannt. Das Display hat hierbei einen um eine senkrechte Achse in einer Mittelkonsole des Kraftfahrzeuges gelagerten Bildschirm. Hierdurch kann man den Bildschirm wahlweise zu dem Fahrer oder dem Beifahrer hinschwenken, so dass die Anzeige nur in einem kleinen Winkelbereich aus deren Blickwinkeln sichtbar ist. Alternativ dazu kann man das Display in eine Mittelstellung bringen, in der die Anzeige in dem großen Winkelbereich von beiden gesehen werden kann. Deshalb kann beispielsweise der Beifahrer während der Fahrt das Display in seine Richtung schwenken und ein Fernsehprogramm verfolgen, ohne dass der Fahrer vom Verkehrsgeschehen abgelenkt wird. Alternativ dazu können sich Fahrer und Beifahrer auf demselben Display gemeinsam beispielsweise die Anzeige eines Stadtplans einer Satellitennavigation ansehen.

DE-A-4 213 129 beschreibt eine Anzeigeeinheit mit den Merkmalen des Oberbegriffs des Anspruchs 1.

Nachteilig bei der bekannten Anzeigeeinheit ist, dass das Display aufwendig zu lagern ist und Anschlussleitungen für das Display schwierig zu verlegen sind. Weiterhin gestaltet sich die Anordnung der Anzeigeeinheit in dem Kraftfahrzeug sehr schwierig, da beispielsweise ein in einer Mittelkonsole montiertes, auf den Beifahrer geschwenktes Display häufig trotzdem aus dem Winkelbereich des Fahrers eingesehen werden kann. Der Fahrer wird deshalb dennoch vom Verkehrsgeschehen abgelenkt.

Der Erfindung liegt das Problem zugrunde, eine Anzeigeeinheit der eingangs genannten Art so zu gestalten, dass es eine Ablenkung des Fahrers bei einer für den Beifahrer vorgesehenen Anzeige zuverlässig verhindert und dass sie möglichst einfach an einer vorgesehenen Position im Kraftfahrzeug zu montieren ist.

Dieses Problem wird erfindungsgemäß dadurch gelöst, dass das Display durchleuchtbar ist, daß die Anzeige auf dem Display sichtbar gemacht wird durch Durchleuchtung, dass hinter dem Display zwei Durchleuchtungseinrichtungen mit jeweils einer schaltbaren Lichtquelle angeordnet sind und dass zumindest eine der Durchleuchtungseinrichtungen ein optisches Element zur gerichteten Durchleuchtung des Displays aufweist.

Durch diese Gestaltung kann das Display fest in einer Armaturentafel des Kraftfahrzeuges montiert und mit der das optische Element aufweisenden Durchleuchtungseinrichtung auf den Beifahrer ausgerichtet werden. Hierbei ist die Anzeige auf dem Display aus dem Blickwinkel des Fahrers nicht sichtbar. Der Fahrer wird deshalb nicht von dem Verkehrsgeschehen abgelenkt. Erst bei Einschalten der anderen Durchleuchtungseinrichtung kann der Fahrer das Bild auf dem Display erkennen. Da die erfindungsgemäße Vorrichtung keine beweglichen mechanischen Bauteile enthält, ist sie besonders kostengünstig herstellbar und montierbar.

Das optische Element hat gemäß einer vorteilhaften Weiterbildung der Erfindung einen besonders geringen Platzbedarf, wenn es eine vor der Lichtquelle angeordnete Jalousiefolie aufweist. Solche Jalousiefolien bestehen aus einer dünnen Kunststofffolie mit fächerförmig oder gitterartig angeordneten Mikrolamellen. Die Mikrolamellen schränken den Winkel des durchgelassenen Lichts beispielsweise auf 30° bis 45° ein. Dieser Winkelbereich genügt bei der in der Armaturentafel montierten Anzeigeeinheit, um das Display für den Fahrer des Kraftfahrzeuges dunkel erscheinen zu lassen, wenn nur die für den Beifahrer vorgesehene Durchleuchtungseinrichtung eingeschaltet ist.

Eine gleichmäßige Durchleuchtung des Displays mit einer kleinen Lichtquelle lässt sich gemäß einer anderen vorteilhaften Weiterbildung der Erfindung einfach erzeugen, wenn das optische Element einen hinter der Lichtquelle angeordneten Reflektor aufweist.

Die Anzeige auf dem Display ist in einem besonders kleinen Winkelbereich zu erkennen, wenn das optische Element eine vor der Lichtquelle angeordnete Linse aufweist. Hierdurch kann die erfindungsgemäße Anzeigeeinheit besonders nahe beim Fahrer angeordnet werden, ohne dass er eine für den Beifahrer vorgesehene Anzeige erkennen kann.

Die erfindungsgemäße Vorrichtung weist gemäß einer anderen vorteilhaften Weiterbildung der Erfindung eine besonders geringe Bautiefe auf, wenn eine der Durchleuchtungseinrichungen einen hinter dem Display angeordneten, mit einer seitlichen Lichtquelle versehenen Lichtleiter aufweist und wenn die andere Durchleuchtungseinrichtung mit dem optischen Element von dem Display aus gesehen hinter dem Lichtleiter angeordnet ist. Hierdurch hat die erfindungsgemäße Vorrichtung eine besonders einfach zu montierende Sandwichbauweise. Weiterhin ist die Durchleuchtungseinrichtung gegenüber dem Display nach der Montage der erfindungsgemäßen Anzeigeeinheit zuverlässig ausgerichtet.

Die Anzeige des Displays lässt sich gemäß einer anderen vorteilhaften Weiterbildung der Erfindung wahlweise für den Fahrer oder den Beifahrer abschalten, wenn die Durchleuchtungseinrichtungen jeweils eine Vielzahl von kammartig ineinandergesteckten Lichtleitern zur jeweiligen Durchleuchtung des Displays in unterschiedlichen Richtungen aufweisen. Durch diese Gestaltung wird das Display zeilenweise durchleuchtet, wobei die Zeilen jeweils entweder für den Fahrer oder den Beifahrer zu erkennen sind. Wenn Fahrer und Beifahrer die Anzeige auf dem Display sehen wollen, können beide Durchleuchtungseinrichtungen eingeschaltet werden.

Zur weiteren Begrenzung des Winkelbereichs des von dem Display abgestrahlten Lichts trägt es gemäß einer anderen vorteilhaften Weiterbildung der Erfindung bei, wenn die dem Display zugewandten Seiten der kammartig ineinandergesteckten Lichtleiter jeweils mit einer Jalousiefolie versehen sind.

Das Display wird gemäß einer anderen vorteilhaften Weiterbildung der Erfindung über seine gesamte Breite gleichmäßig durchleuchtet, wenn die kammartig ineinandergesteckten Lichtleiter keilförmig gestaltet sind.

Wenn Leuchtstofflampen als Lichtquellen zur Durchleuchtung des Displays vorgesehen sind, wird eine Aufheizung der erfindungsgemäßen Anzeigeeinheit besonders gering gehalten.

Die erfindungsgemäße Anzeigeeinheit hat ein besonders geringes Gewicht und ist kostengünstig herstellbar, wenn die Lichtleiter aus Kunststoff gefertigt sind.

Bei auf das Display auftreffendem Fremdlicht ist die Anzeige auf dem Display möglicherweise auch ohne Durchleuchtung sichtbar. Solche Fremdlichteinflüsse lassen sich gemäß einer anderen vorteilhaften Weiterbildung der Erfindung einfach vermeiden, wenn das Display eine dunkel getönte oder reflektierende Oberfläche aufweist. Hierdurch wird sichergestellt, dass nur dann eine Anzeige auf dem Display erkannt werden kann, wenn es durchleuchtet wird.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Darstellung einer erfindungsgemäßen, in einer Armaturentafel eines Kraftfahrzeugs montierten Anzeigeeinheit,
- Fig.2: eine weitere Ausführungsform einer erfindungsgemäßen Anzeigeeinheit,
- Fig.3: eine erfindungsgemäße Anzeigeeinheit mit kammartig ineinandergesteckten Lichtleitern,
- Fig.4: eine Schnittdarstellung durch die Anzeigeeinheit aus Fig. 3 entlang der Linie IV - IV.

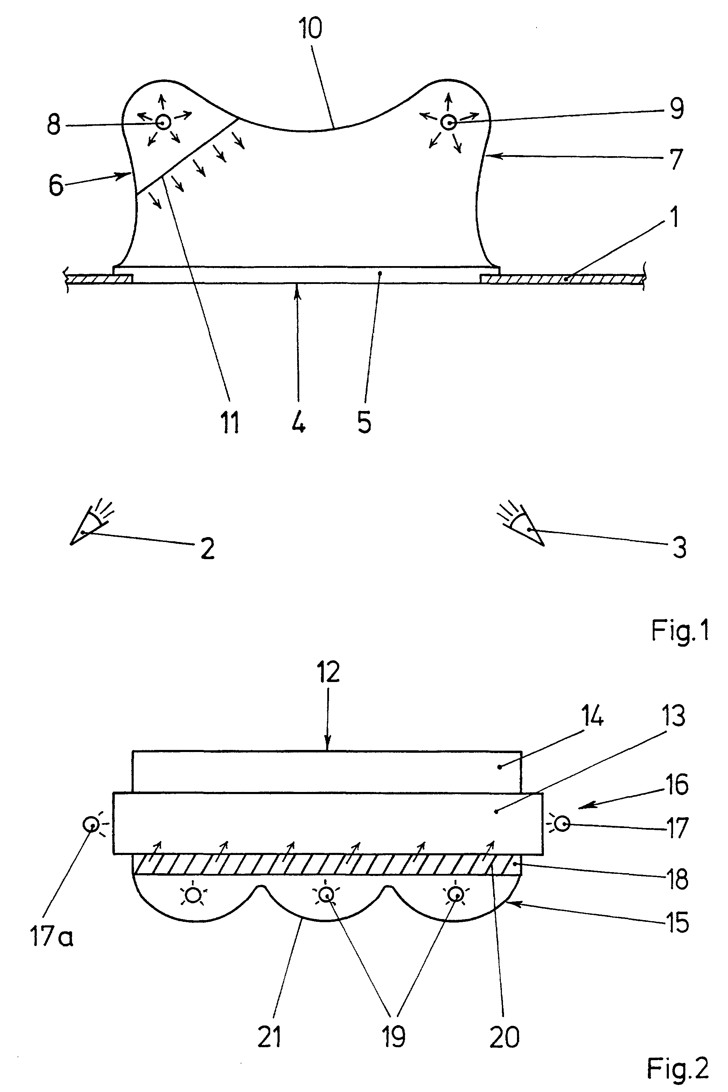

Die Figur 1 zeigt eine erfindungsgemäße, in einer Armaturentafel 1 oder einer Mittelkonsole eines Kraftfahrzeuges zwischen einem Fahrer 2 und einem Beifahrer 3 montierte Anzeigeeinheit 4. Die Anzeigeeinheit 4 hat ein beispielsweise als LC-Bildschirm ausgebildetes Display 5. Hinter dem Display 5 sind zwei Durchleuchtungseinrichtungen 6, 7 mit jeweils einer Lichtquelle 8, 9 angeordnet. Die Durchleuchtungseinrichtungen 6, 7 haben einen gemeinsamen Reflektor 10. Eine der Durchleuchtungseinrichtungen 6 hat eine vor der Lichtquelle 8 angeordnete Jalousiefolie 11. Diese Jalousiefolie 11 lässt das Licht von der hinter ihr angeordneten Lichtquelle 8 nur in einem kleinen Winkelbereich in Richtung zu ihrer auf den Beifahrer 3 weisenden Normalen durch. Zur Verdeutlichung sind die Lichtstrahlen in der Zeichnung mit Pfeilen gekennzeichnet.

Eine Anzeige auf dem Display 5 ist deshalb ausschließlich für den Beifahrer 3 sichtbar, wenn nur die Lichtquelle 8 hinter der Jalousiefolie 11 eingeschaltet ist. Deshalb wird der Fahrer 2 nicht von dem Verkehrsgeschehen abgelenkt, wenn der Beifahrer 3 beispielsweise auf dem Display 5 ein Fernsehprogramm verfolgt. Wenn man die andere Lichtquelle 9 einschaltet, ist die Anzeige auf dem Display 5 in einem großen Winkelbereich für Fahrer 2 und Beifahrer 3 sichtbar. Hierbei kann das Display 5 beispielsweise zur Anzeige eines Stadtplans einer Satellitennavigation geschaltet sein. Selbstverständlich kann man auch vor beiden Lichtquellen 8, 9 jeweils eine Jalousiefolie 11 anordnen. Hierdurch könnte man die Anzeige auf dem Display 5 wahlweise für Fahrer 2 oder Beifahrer 3 oder - bei Einschaltung beider Lichtquellen 8, 9 - für beide sichtbar schalten. Zur Vermeidung von Fremdlichteinflüssen ist das Display 5 auf der dem Fahrer 2 zugewandten Seite dunkel getönt.

Die Figur 2 zeigt eine erfindungsgemäße Anzeigeeinheit 12 mit einem plattenförmigen Lichtleiter 13, der mit einer Seite unmittelbar an einem Display 14 anliegt. Der Lichtleiter 13 ist Teil zweier Durchleuchtungseinrichtungen 15, 16, von denen eine seitlich an dem Lichtleiter 13 angeordnete Lichtquellen 17, 17a und die andere hinter einer Jalousiefolie 18 angeordnete Lichtquellen 19 hat. Die Jalousiefolie 18 hat schräggestellte Lamellen 20, so dass das Display 14 von von den hinter der Jalousiefolie 18 angeordneten Lichtquellen 19 abgestrahltem Licht in einem kleinen Winkelbereich in Richtung der Lamellen 20 durchleuchtet wird. Zur Vergleichmäßigung der Durchleuchtung des Displays 14 ist hinter den Lichtquellen 19 ein Reflektor 21 angeordnet. Eine Anzeige auf dem Display 14 kann daher nur eine Person sehen, die aus dieser Richtung auf das Display 14 blickt. Bei eingeschalteten seitlich an dem Lichtleiter 13 angeordneten Lichtquellen 17, 17a wird das Display 14 diffus durchleuchtet, so dass eine Anzeige auf dem Display 14 von jeder Position aus gesehen werden kann.

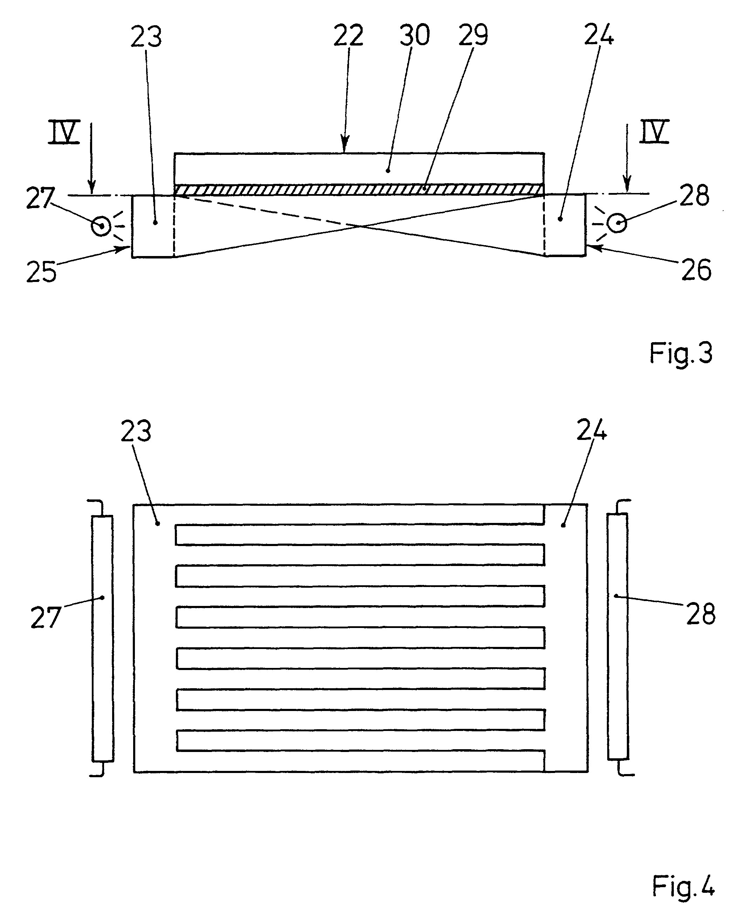

Die Figur 3 zeigt eine erfindungsgemäße Anzeigeeinheit 22 mit kammartig ineinandergesteckten Lichtleitern 23, 24 von jeweils einer Durchleuchtungseinrichtung 25, 26. Die Lichtleiter 23, 24 sind keilförmig gestaltet und werden jeweils von einer Lichtquelle 27, 28 gespeist. An ihrer Oberseite sind die Lichtleiter 23, 24 jeweils mit einer Jalousiefolie 29 versehen, deren Lamellen entweder in Richtung des Fahrers 2 oder des Beifahrers 3 aus Figur 1 angeordnet sind. Bei einem entsprechenden Schalten der Lichtquellen 27, 28 der Durchleuchtungseinrichtungen 25, 26 wird ein vor der Jalousiefolie 29 angeordnetes Display 30 in vorgesehenen Richtungen durchleuchtet.

Die Figur 4 verdeutlicht in einer Schnittdarstellung entlang der Linie IV - IV aus Figur 3 den Aufbau der Anzeigeeinheit 22 mit den kammartig ineinandergesteckten Lichtleitern 23, 24. Das in Figur 3 dargestellte Display 30 wird damit von den Durchleuchtungseinrichtungen 25, 26 jeweils zeilenweise durchleuchtet. Die Lichtquellen 27, 28 sind für eine möglichst geringe Wärmeentwicklung als Neonröhren ausgebildet.

## Patentansprüche

1. Zur Befestigung in einem Kraftfahrzeug vorgesehene Anzeigeeinheit mit einem Display (5, 14, 30), wobei eine Anzeige auf dem Display entweder in einem kleinen Winkelbereich oder in einem großen Winkelbereich sichtbar ist, **dadurch gekennzeichnet, daß** das Display (5, 14, 30) durchleuchtbar ist, daß die Anzeige auf dem Display (5, 14, 30) sichtbar gemacht wird durch Durchleuchtung, daß hinter dem Display (5, 14, 30) zwei Durchleuchtungseinrichtungen (6, 7, 15, 16, 25, 26) mit jeweils einer schaltbaren Lichtquelle (8, 9, 17, 19, 27, 28) angeordnet sind und daß zumindest eine der Durchleuchtungseinrichtungen (6, 7, 15, 16, 25, 26) ein optisches Element (11, 18, 29, 10, 21) zur gerichteten Durchleuchtung des Displays (5, 14, 30) aufweist.

2. Anzeigeeinheit nach Anspruch 1, **dadurch gekennzeichnet, dass** das optische Element eine vor der Lichtquelle (8, 19, 27) angeordnete Jalousiefolie (11, 18, 29) aufweist.

3. Anzeigeeinheit nach Anspruch 1 oder 2, **dadurch gekennzeichnet, dass** das optische Element einen hinter der Lichtquelle (8, 9, 19) angeordneten Reflektor (10, 21) aufweist.

4. Anzeigeeinheit nach zumindest einem der vorhergehenden Ansprüche, **dadurch gekennzeichnet, dass** das optische Element eine vor der Lichtquelle angeordnete Linse aufweist.

5. Anzeigeeinheit nach zumindest einem der vorhergehenden Ansprüche, **dadurch gekennzeichnet, dass** eine der Durchleuchtungseinrichungen (16) einen hinter dem Display (14) angeordneten, mit einer seitlichen Lichtquelle (17) versehenen Lichtleiter (13) aufweist und dass die andere Durchleuchtungseinrichtung (15) mit dem optischen Element (Jalousiefolie 18) von dem Display (14) aus gesehen hinter dem Lichtleiter (13) angeordnet ist.

6. Anzeigeeinheit nach zumindest einem der vorhergehenden Ansprüche, **dadurch gekennzeichnet, dass** die Durchleuchtungseinrichtungen (25, 26) jeweils eine Vielzahl von kammartig ineinandergesteckten Lichtleitern (23, 24) zur jeweiligen Durchleuchtung des Displays (30) in unterschiedlichen Richtungen aufweisen.

7. Anzeigeeinheit nach zumindest einem der vorhergehenden Ansprüche, **dadurch gekennzeichnet, dass** die dem Display (30) zugewandten Seiten der kammartig ineinandergesteckten Lichtleiter (23, 24) jeweils mit einer Jalousiefolie (29) versehen sind.

8. Anzeigeeinheit nach zumindest einem der vorhergehenden Ansprüche, **dadurch gekennzeichnet, dass** die kammartig ineinandergesteckten Lichtleiter (23, 24) keilförmig gestaltet sind.

9. Anzeigeeinheit nach zumindest einem der vorhergehenden Ansprüche, **gekennzeichnet durch** Leuchtstofflampen als Lichtquellen (27, 28).

10. Anzeigeeinheit nach zumindest einem der vorhergehenden Ansprüche, **dadurch gekennzeichnet, dass** die Lichtleiter (13, 23, 24) aus Kunststoff gefertigt sind.

11. Anzeigeeinheit nach zumindest einem der vorhergehenden Ansprüche, **dadurch gekennzeichnet, dass** das Display (5, 14, 30) eine dunkel getönte oder reflektierende Oberfläche aufweist.

## Claims

1. Display unit for attachment in a motor vehicle, with a display (5, 14, 30), an indication on the display being visible either in a small angular range or in a large angular range, **characterized in that** the display (5, 14, 30) can be transilluminated, **in that** the indication on the display (5, 14, 30) is made visible by transillumination, **in that** two transilluminating devices (6, 7, 15, 16, 25, 26), each with a switchable light source (8, 9, 17, 19, 27, 28), are arranged behind the display (5, 14, 30) and **in that** at least one of the transilluminating devices (6, 7, 15, 16, 25, 26) has an optical element (11, 18, 29, 10, 21) for the directed transillumination of the display (5, 14, 30).

2. Display unit according to Claim 1, **characterized in that** the optical element has a louvred sheet (11, 18, 29) arranged in front of the light source (8, 19, 27).

3. Display unit according to Claim 1 or 2, **characterized in that** the optical element has a reflector (10, 21) arranged behind the light source (8, 9, 19).

4. Display unit according to at least one of the preceding claims, **characterized in that** the optical element has a lens arranged in front of the light source.

5. Display unit according to at least one of the preceding claims, **characterized in that** one of the transilluminating devices (16) has a light guide (13) which is arranged behind the display (14) and is provided with a lateral light source (17), and **in that** the other transilluminating device (15), with the optical element (louvred sheet 18), is arranged behind the light guide (13), as seen from the display (14).

6. Display unit according to at least one of the preceding claims, **characterized in that** the transilluminating devices (25, 26) in each case have a multiplicity of light guides (23, 24) inserted one into the other in a comb-like manner for the respective transillumination of the display (30) in different directions.

7. Display unit according to at least one of the preceding claims, **characterized in that** the sides, facing the display (30), of the light guides (23, 24) inserted one into the other in a comb-like manner are respectively provided with a louvred sheet (29).

8. Display unit according to at least one of the preceding claims, **characterized in that** the light guides (23, 24) inserted one into the other in a comb-like manner are designed in a wedge-shaped manner.

9. Display unit according to at least one of the preceding claims, **characterized by** fluorescent lamps as light sources (27, 28).

10. Display unit according to at least one of the preceding claims, **characterized in that** the light guides (13, 23, 24) are made of plastic.

11. Display unit according to at least one of the preceding claims, **characterized in that** the display (5, 14, 30) has a dark-tinted or reflecting surface.

## Revendications

1. Ensemble indicateur prévu pour être monté dans un véhicule automobile comportant un afficheur (5, 14, 30), une image sur l'afficheur étant visible soit sous un faible domaine angulaire, soit sous un grand domaine angulaire, **caractérisé par le fait que** l'afficheur (5, 14, 30) peut être éclairé par transparence, en ce que l'image sur l'afficheur (5 ,14, 30) est rendue visible par éclairage par transparence, en ce que deux dispositifs d'éclairage par transparence (6, 7, 15, 16, 25, 26) comportant chacun une source lumineuse commutable (8, 9, 17, 19, 27, 28), sont disposés derrière l'afficheur (5, 14, 30) et en ce qu'au moins l'un des dispositifs d'éclairage par transparence (6, 7, 15, 16, 25, 26) comporte un élément optique (11, 18, 29, 10, 21) pour un éclairage par transparence dirigé de l'afficheur (5, 14, 30).

2. Ensemble indicateur conforme à la revendication 1, **caractérisé en ce que** l'élément optique comporte une feuille formant jalousie (11, 18, 29) placée devant la source lumineuse (8, 9, 27).

3. Ensemble indicateur selon la revendication 1 ou 2, **caractérisé en ce que** l'élément optique comprend un réflecteur (10, 21) placé derrière la source lumineuse (8, 9, 19).

4. Ensemble indicateur selon au moins l'une des revendications précédentes, **caractérisé en ce que** l'élément optique comporte une lentille disposée devant la source lumineuse.

5. Ensemble indicateur selon au moins l'une des revendications précédentes, **caractérisé en ce que** l'un des dispositifs d'éclairage par transparence (16) comporte un guide de lumière (13) disposé derrière l'afficheur (14) et muni d'une source lumineuse latérale (17) et **en ce que** l'autre dispositif d'éclairage par transparence (15) est disposé, avec l'élément optique (feuille formant jalousie 18), derrière le guide de lumière 13, en regardant à partir de l'afficheur (14).

6. Ensemble indicateur selon au moins l'une des revendications précédentes, **caractérisé en ce que** les dispositifs d'éclairage par transparence (25, 26) comportent une pluralité de guides de lumière (23, 24) en forme de peigne imbriqués les uns dans les autres pour un éclairage par transparence de l'afficheur (30) respectivement selon différentes directions.

7. Ensemble indicateur selon au moins l'une des revendications précédentes, **caractérisé en ce que** les faces tournées vers l'afficheur (30) des guides de lumière en forme de peigne imbriquées les uns dans les autres (23, 24) sont munies chacune d'une feuille formant jalousie (29).

8. Ensemble indicateur selon au moins l'une des revendications précédentes, **caractérisé en ce que** les guides de lumière en forme de peigne imbriqués les uns dans les autres (23, 24) ont une forme de coin.

9. Ensemble indicateur conforme à au moins l'une des revendications précédentes, **caractérisé par** des lampes à gaz lumineux en tant que sources lumineuses (27, 28).

10. Ensemble indicateur selon au moins l'une des revendications précédentes, **caractérisé en ce que** les guides de lumière (13, 23, 24) sont réalisés en matière synthétique.

11. Ensemble indicateur selon au moins l'une des revendications précédentes, **caractérisé en ce que** l'afficheur (5, 14, 30) présente une surface réfléchissante ou teintée en sombre.
